# EUROPÄISCHE PATENTSCHRIFT

(11) **EP 2 214 800 B1**
(45) Veröffentlichungstag und Bekanntmachung des Hinweises auf die Patenterteilung: **16.03.2016**
(21) Anmeldenummer: 08850773.6
(22) Anmeldetag: 12.11.2008
(51) Int. Cl.: B01D 39/16, B01D 39/20, B01D 39/08

(54) **FILTERMEDIUM**
FILTER MEDIUM
ÉLÉMENT FILTRANT

(30) Priorität: 12.11.2007 DE 102007054199; 14.03.2008 DE 102008014452
(43) Veröffentlichungstag der Anmeldung: 11.08.2010
(73) Patentinhaber: MGF Gutsche GmbH & Co. KG, 36039 Fulda (DE)
(72) Erfinder: GUTSCHE, Michael, 36039 Fulda (DE); RUOFF, Günter, 63263 Neu-Isenburg (DE)
(74) Vertreter: Müller, Eckhard
(86) Internationale Anmeldenummer: PCT/EP2008/009513
(87) Internationale Veröffentlichungsnummer: WO 2009/062666

(56) Entgegenhaltungen:
- EP-A- 0 246 917
- EP-A- 0 391 660
- EP-A- 0 962 243
- DE-U1- 9 301 950
- DATABASE WPI Week 200522 Thomson Scientific, London, GB; AN 2005-205218 & JP 2005 052709 A (TORAY IND INC) 3 March 2005 (2005-03-03)

## Beschreibung

Die Erfindung betrifft ein Filtermedium, welches aus einem Gewebe aus mineralischen Garnen besteht, das durch Vernadeln mit polymeren Stapelfasern belegt ist.

### Stand der Technik

Derartige Filtermedien werden zur Filtration von industriellen Fluidströmen, beispielsweise bei Heisgasanwendungen, wie etwa Müllverbrennungsanlagen, Zementöfen und Kohlefeuerungen, eingesetzt. Das erfindungsgemäße Filtermedium kann dabei bspw. in sogenannten Schlauchfilteranlagen zur Anwendung kommen, wobei die aus dem Filtermedium konfektionierten Filterschläuche auf Stützkörbe aufgezogen werden. Im Laufe der Zeit muss das textile Filtermaterial gereinigt und der an den Filtern angelagerte Staubkuchen entfernt werden.

Ein sehr effizientes Reinigungsverfahren stellt das sogenannte "Püls-Jet"-Verfahren dar, bei welchem Druckluftimpulse zu einer Bewegung des textilen Filtermaterials führen, wodurch der Staubkuchen von dem Filter abgereinigt werden kann. Aufgrund der Reinigung sind die Filtermedien hohen mechanischen Beanspruchungen ausgesetzt, was die Gefahr eines Entnadelns der Stapelfasern von dem Gewebe und/oder mechanische Schädigungen des Gewebes in sich birgt.

Insoweit ist aus der EP 0 962 243 A2 bereits ein Filtermedium der vorstehend genannten Art bekannt, welches sich u. a. durch eine hohe Dimensionsstabilität und Temperaturbeständigkeit sowie Chemiebeständigkeit auszeichnet. Trotz geringer Belegung mit Stapelfasern sind bei dem Gewebe nach jener Druckschrift Querbrüche im wesentlichen ausgeschlossen, weil es praktisch zu keiner Entnadelung kommen kann und deshalb das zur Verhinderung von Querbrüchen unerlässliche Minimum an querstehenden Stapelfasern nicht unterschritten wird.

Zur Verbesserung der mechanischen Stabilität bei Filtermedien sind aus der EP 0 391 660 A1 bereits Filterlaminate bekannt, welche eine Membran aus expandiertem porösem Polytetrafluorethylen, ein Stützgewebe ebenfalls aus Polytetrafluorethylen sowie auf das Stützgewebe aufgenadelte Stapelfasern wiederum aus Polytetrafluorethylen aufweisen. Die Verbindung zwischen den Stapelfasern und der Membran erfolgt durch ein fluoriertes Polymer als Klebstoff.

Schließlich ist auch aus der EP 1 862 208 A1 ein Filtermedium bekannt mit einem Basaltfasern enthaltenden Stützgewebe, wobei mindestens eine Seite des Stützgewebes mit polymeren Stapelfasern belegt ist.

### Problem

Der Erfindung liegt die Aufgabe zugrunde, ein Filtermedium der eingangs genannten Art dahingehend zu verbessern, dass es hohen mechanischen Beanspruchungen ohne die Gefahr des Entnadelns oder von Querbrüchen standhält.

### Erfindung

Zur Lösung dieser Aufgabe ist es nach der Erfindung bei einem Filtermedium mit den Merkmalen des Oberbegriffs des Anspruchs 1 im Wesentlichen vorgesehen, dass auf wenigstens einer Seite des Filtermediums, insbesondere auf seiner Anströmseite eine Membran aus porösem Polytetrafluorethylen aufkaschiert ist.

Dabei hat sich überraschenderweise gezeigt, dass selbst bei einer geringen Belegung des Filtermediums mit Stapelfasern es nicht zu einem Lösen der Stapelfasern vom Gewebe und damit zu einem Lösen des Faserverbundes untereinander kommt. Diese Problematik ist bei einem Filterlaminat nach der EP 0 391660 A1 nicht gegeben, da dort von vornherein ein sehr hohes Flächengewicht der Stapelfasern von 678 bis 881 g/m² vorhanden ist, wodurch eine gute Verankerung der Stapelfaser erreicht und dadurch der Gefahr einer Entnadelung entgegengewirkt ist.

Darüber hinaus führt das Aufkaschieren der Membran zu einer zusätzlichen Faserverankerung des Faserverbundes mit dem Gewebe. Diese vorteilhafte Wirkung ist gegenüber Laminatfiltern mit hohem Gewichtsanteil an polymeren Stapelfasern nicht erreichbar ist, da dort das Gewebe durch die Fasern praktisch abgedeckt wird.

Weitere Ausgestaltungen der Erfindung sind Gegenstand der Unteransprüche.

Die Membrane kann nach der Erfindung aus expandiertem porösem Polytetrafluorethylen mit einer Luftdurchlässigkeit von wenigstens 0,01 m³ pro m² pro Stunde bei 12,7 mm Wassersäule bestehen. Bezüglich der Herstellung derartiger Membrane wird ebenfalls auf die EP 0 391 660 A1 verwiesen.

Von besonderem Vorteil ist dabei, wenn die Membran mit dem Filtermedium mittels eines Klebstoffes befestigt wird. Dabei hat sich gezeigt, dass der Klebstoff so weit in das Filtermedium vordringt, dass es zu einer nochmaligen Verbesserung der Faserverankerung des Faserverbundes mit dem Gewebe kommt.

Als Klebstoff kann beispielsweise eine fluorierter Polymer-Klebstoff, wie er in der EP 0 391 660 A1 angegeben ist, zur Anwendung kommen, ebenso das dort beschriebene Verfahren zum Aufbringen des Klebstoffes.

Das Gewebe des Filtermediums kann nach einer Ausgestaltung der Erfindung Glasfasern aufweisen oder daraus bestehen. Dabei erfüllen die Glasfasern nicht nur die Funktion eines Stützgewebes, sondern können aufgrund der Dichte des durch sie gebildeten Gewebes auch eine Filterfunktion ausüben. Die Stapelfasern dienen dazu, Querbrüche des Filtermediums zu verhindern, indem durch die Stapelfasern ein Knicken mit für die Glasfasern zu engen Krümmungsradien ausgeschlossen wird.

Alternativ oder zusätzlich ist es nach der Erfindung auch möglich, dass das Gewebe Basaltgarne, beispielsweise Filamentgarne, aufweist oder daraus besteht.

Die erfindungsgemäß vorgesehenen Basaltgarne können endlos gezogene Basaltgarnen sein, welche typischerweise aus einer Basaltschmelze im großtechnischen Maßstab gewonnen werden. Die Basaltgarne weisen eine hohe Temperaturbeständigkeit von bis zu 600 °C auf. Weitere Verfahren zur Herstellung von Basaltfasern bzw. -garne werden zum Beispiel in der DE 29 09 148 A sowie in DE 35 09 424 A1 beschrieben

Die erfindungsgemäß eingesetzten Basaltgarne weisen eine gegenüber Glasgewebe höhere thermische Beständigkeit und höhere Dimensionsstabilität auf. Bei den physikalischen Eigenschaften weisen sie einen Garndurchmesser von kleiner 10 µm auf, sowie einen Tex von kleiner 140. Das spezifische Gewicht beträgt 2,6 bis 2,8 kg/dm³. Die mechanische Festigkeit des Gewebes sowohl in Längs- als auch in Querrichtung ist größer als 1000 N pro 5 cm.

Die erfindungsgemäß eingesetzten Basaltgarne sind ein Naturprodukt, die aber keinem schnellen biologischen Abbau unterliegen. Der Rohstoff ist in großen Mengen vorhanden, was das Produkt relativ preisgünstig macht, zumal es sich um eine Einkomponentenherstellung handelt. Die Beständigkeit von Basaltgarnen gegenüber chemischen und mechanischen Einflüssen ist hoch, was sie für den Einsatz bei Filtermedien besonders geeignet macht.

Denkbar ist es nach der Erfindung auch, dass das Gewebe Basaltgarne und Glasgarne bzw. Glasfasern aufweist, wodurch sich die vorteilhaften Eigenschaften von Basaltgarnen mit denen von Glasgarnen kombinieren lassen.

Herstellungstechnisch besonders günstig ist es, wenn nach einer Ausführungsform der Erfindung das Gewebe aus miteinander verwebten Strängen von Kett- und Schussfäden, beispielsweise in mehrlagiger Form, aus Basaltgarnen und/oder Glasfasern besteht. Der Kettfadenstrang kann aus einer Vielzahl einzelner paralleler Filamente bestehen, wie auch der Schüssfadenstrang. Die einzelnen Kett- und Schussfäden können parallel zueinander liegen und ein in sich geschlossenes Gewebe mit geringer Dicke bilden.

Um der Gewebekonstruktion eine ausreichende Festigkeit zu verleihen, werden die Kett- und Schussfäden an verschiedenen Bindungs- und Verknüpfungspunkten bindungstechnisch verbunden. Weiterhin ist aber auch eine Leinwand- oder Körperbindung ebenso wie auch eine Dreherbindung möglich. Zur Herstellung des Gewebes aus Basaltgarnen und/oder Glasfasern sind unterschiedliche Webtechniken und Gewebestärken möglich.

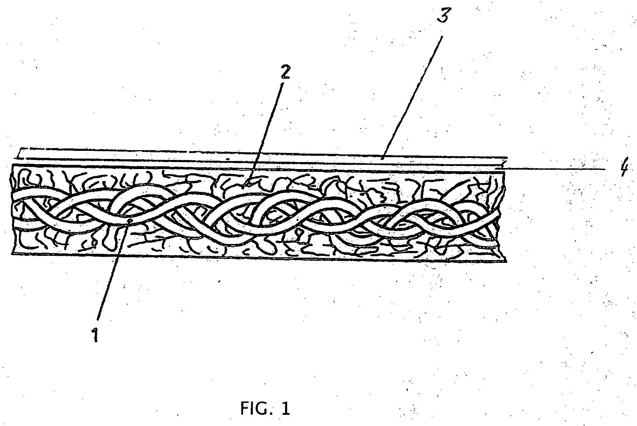

Weitere Ziele, Vorteile und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Die einzige Figur zeigt eine Filtermediumstruktur nach der Erfindung. Das dargestellte Filtermedium hat ein Gewebe 1, das bei einer Ausführungsform aus miteinander verwebten Glasfasern besteht. Der Gewichtsanteil des Glasfasergewebes am Gesamtgewicht des Filtermediums beträgt beispielsweise 70 bis 85 %. Das Gewebe 1 ist daher für sich allein schon in der Lage, eine Filterfunktion auszuüben, denn es hat aufgrund seiner Dicke genügend Längsfestigkeit, sodass ein herkömmliches Stützgewebe nicht benötigt wird.

Das Gewebe 1 ist mit einem geringen Anteil an Stapelfasern aus PTFE belegt, wodurch das Filtermedium beispielsweise eine Dicke von 1,5 mm erhält. Diese eingenadelten Stapelfasern 2 verhindern enge Krümmungsradien bei den das Gewebe 1 bildenden Glasfasern und vermeiden somit Querbrüche.

Das Gewebe 1 ist so engmaschig gewebt, dass es ein Flächengewicht von über 250 g/m² und eine Dicke von mindestens 0,5 mm hat. Die Glasfasern haben einen Titer von höchstens 0,8 dtex bis 8 dtex und eine Schnittlänge von mindestens 20 mm. Nach dem Vernadeln wird das Filtermedium einer Wärmebehandlung über 150 °C unterzogen, damit es zu einer Schrumpfung der Stapelfasern 2 kommt und diese sich dadurch gegenseitig und in dem Gewebe 1 verankern können. Zusätzlich kann das Filtermedium nach dem Vernadeln mit PTFE-Stapelfasern in einem Bad mit einem Überzug versehen werden, der den PTFE-Stapelfasern eine raue Oberfläche verleiht.

Alternativ kann das Gewebe 1 auch Basaltgarne aufweisen oder daraus bestehen Denkbar ist auch, dass das Gewebe 1 aus Basaltgarnen und Glasgarnen bzw. - fasern besteht.

Im Falle, dass das Gewebe ausschließlich aus Basaltgaren besteht, kann der Gewichtsanteil des Gewebes 1 aus Basaltgarnen am Gesamtgewicht des Filtermediums beispielsweise 50 bis 85 % betragen. Das Gewebe 1 ist daher ebenfalls bereits für sich allein schon in der Lage, eine Filterfunktion auszuüben, denn es hat aufgrund seiner Dicke genügend Längsfestigkeit, sodass ein herkömmliches Stützgewebe nicht benötigt wird.

Das Basaltgewebe 1 lässt sich relativ preisgünstig herstellen, wobei Basaltgarne gegenüber mechanischen und thermischen Einflüssen eine hohe Beständigkeit aufweisen. Vor allem besitzt das Basaltgewebe eine höhere Schmelztemperatur als Glasgewebe, was sich ebenfalls vorteilhaft auf die Standzeit des Filtermediums auswirkt. Zudem weisen die Basaltgarne ein extrem niedriges Aufnahmevermögen für Wasser und andere Flüssigkeiten auf.

Das Gewebe 1 ist bei dem hier gewählten Ausführungsbeispiel mit einem geringen Anteil an polymeren Stapelfasern, beispielsweise aus Polytetrafluorethylen (PTFE) belegt, wodurch das Filtermedium beispielsweise eine Dicke von 1,5 mm erhält. Diese eingenadelten Stapelfasern 2 verhindern enge Krümmungsradien bei den das Gewebe 1 bildenden Basaltgarnen und vermeiden somit Querbrüche.

Das Gewebe 1 ist so engmaschig gewebt, dass es ein Flächengewicht von über 250 g/m² und eine Dicke von mindestens 0,5 mm hat.

Nach dem Vernadeln wird auch das Basaltfasern aufweisende Filtermedium einer Wärmebehandlung über 100°C unterzogen, damit es zu einer Schrumpfung der Stapelfasern 2 kommt und diese sich dadurch gegenseitig und in dem Gewebe 1 verankern können. Zusätzlich kann das Filtermedium nach dem Vernadeln mit polymeren Stapelfasern in einem Bad mit einem Überzug versehen werden, der den Stapelfasern eine rauhere Oberfläche verleiht.

Vorzugsweise ist auch bei dieser Ausführungsform des Filtermediums auf seiner Anströmseite wiederum eine Membran 3 aus expandiertem porösem Polytetrafluorethylen aufkaschiert, wobei ein Klebstoff 4 aus fluoriertem Polymer eingesetzt wird. Dabei hat sich gezeigt, dass der Klebstoff 4 so weit in das Filtermedium vordringt, dass es eine zusätzliche Verbesserung der Verankerung des Faserverbundes mit dem Gewebe 1, kombiniert mit einer hohen mechanischen Flexibilität und thermischen Beanspruchbarkeit des Filters erreicht wird

Es sei an dieser Stelle darauf hihgewiesen, dass die Kleberschicht 4 und die Membran 3 zur Verdeutlichung überdimensional zu den anderen Dimensionen des Filtermediums dargestellt ist.

### Bezugszeichenliste

1 - Gewebe
2 - Stapelfasern
3 - Membran
4 - Klebstoff

## Patentansprüche

1. Filtermedium, welches aus einem Gewebe (1) aus mineralischen Garnen besteht, das durch Vernadeln mit polymeren Stapelfasern (2) belegt ist, **dadurch gekennzeichnet, dass** auf wenigstens einer Seite des Filtermediums, insbesondere auf seiner Anströmseite, eine Membran (3) aus porösem Polytetrafluorethylen aufkaschiert ist.

2. Filtermedium nach Anspruch 1, **dadurch gekennzeichnet, dass** die Membran (3) aus expandiertem porösem Polytetrafluorethylen besteht mit einer Luftdurchlässigkeit von wenigstens 0,01 m³ pro m² pro Stunde bei 12,7 mm Wassersäule.

3. Filtermedium nach Anspruch 2 oder 3, **dadurch gekennzeichnet, dass** die Membran (3) mit dem Filtermedium mittels eines Klebstoffes (4) verbunden ist.

4. Filtermedium nach Anspruch 3, **dadurch gekennzeichnet, dass** der Klebstoff (4) ein fluoriertes Polymer ist.

5. Filtermedium nach einem der vorhergehenden Ansprüche, **dadurch gekennzeichnet, dass** das Gewebe (1) Glasfasern aufweist oder daraus besteht.

6. Filtermedium nach einem der Ansprüche 1 bis 4, **dadurch gekennzeichnet, dass** das Gewebe (1) Basaltgarne aufweist oder daraus besteht.

7. Filtermedium nach Anspruch 6, **dadurch gekennzeichnet, dass** die Basaltgarne Fasergarne und/oder Filamentgarne, insbesondere Multifilamentgarne, sind.

8. Filtermedium nach einem der vorhergehenden Ansprüche, **dadurch gekennzeichnet, dass** das Gewebe (1) Kett- und Schussfäden, jeweils aus Basaltgarnen und/oder Glasfasern aufweisen oder daraus bestehen.

9. Filtermedium nach einem der vorhergehenden Ansprüche, **dadurch gekennzeichnet, dass** das aus Rovings und Garnen, hergestellte Gewebe (1) ein Flächengewicht von 250 bis 600 g/m², insbesondere von 400 bis 500 g/m², aufweist.

10. Filtermedium nach einem der vorhergehenden Ansprüche, **dadurch gekennzeichnet, dass** das Gewebe (1) aus mehreren Schichten oder Lagen besteht.

11. Filtermedium nach einem der vorhergehenden Ansprüche, **dadurch gekennzeichnet, dass** der Gewichtsanteil der Stapelfasern (2) am Gesamtgewicht des Filtermediums unter 40 % liegt.

12. Filtermedium nach einem der vorhergehenden Ansprüche, **dadurch gekennzeichnet, dass** das Gewebe (1) ein Flächengewicht von über 250 g/m² und eine Dicke von mindestens 0,5 mm hat und dass die Stapelfasern (2) einen Titer von 0,5 dtx bis 10 dtx, vorzugsweise von 0,9 bis 7 dtex, und eine Schnittlänge von mindestens 20 mm haben.

13. Filtermedium nach einem der vorgehenden Ansprüche, **dadurch gekennzeichnet, dass** die Stapelfasern (2) aus Polytetrafluorethylen bestehen.

14. Filtermedium nach einem der vorhergehenden Ansprüche, **dadurch gekennzeichnet, dass** die Oberfläche der Stapelfasern (2) durch einen nach dem Vernadeln aufgebrachten polymeren Überzug aufgeraut ist.

15. Filtermedium nach Anspruch 14, **dadurch gekennzeichnet, dass** der Überzug aus einem organische Füllstoffe aufweisenden Polytetrafluorethylen besteht.

16. Filtermedium nach einem der vorhergehenden Ansprüche, **dadurch gekennzeichnet, dass** es die Form eines Tuches aufweist.

17. Filtermedium nach einem der Ansprüche 1 bis 15, **dadurch gekennzeichnet, dass** es die Form eines Beutels oder einer Tasche aufweist.

## Claims

1. Filter medium consisting of a woven fabric (1) formed from mineral yarns and covered with polymeric staple fibres (2) by needling, **characterized in that** at least one side of the filter medium, in particular its inflow side, is laminated with a membrane (3) in porous polytetrafluoroethylene.

2. Filter medium according to Claim 1, **characterized in that** the membrane (3) consists of expanded porous polytetrafluoroethylene having an air permeability of at least 0.01 m³ per m² per hour under a hydrohead of 12.7 mm.

3. Filter medium according to Claim 2 or 3, **characterized in that** an adhesive (4) attaches the membrane (3) to the filter medium.

4. Filter medium according to Claim 3, **characterized in that** the adhesive (4) is a fluorinated polymer.

5. Filter medium according to any preceding claim, **characterized in that** the woven fabric (1) includes or consists of glass fibres.

6. Filter medium according to any of Claims 1 to 4, **characterized in that** the woven fabric (1) includes or consists of basalt yarns.

7. Filter medium according to Claim 6, **characterized in that** the basalt yarns are spun yarns and/or filament yarns, in particular multifilament yarns.

8. Filter medium according to any preceding claim, **characterized in that** the woven fabric (1) warp and weft threads each include or consist of basalt yarns and/or glass fibres.

9. Filter medium according to any preceding claim, **characterized in that** the woven fabric (1) formed from rovings and yarns has a basis weight in the range from 250 to 600 g/m², in particular from 400 to 500 g/m².

10. Filter medium according to any preceding claim, **characterized in that** the woven fabric (1) consists of two or more layers or plies.

11. Filter medium according to any preceding claim, **characterized in that** below 40% of the overall weight of the filter medium is accounted for by the weight fraction of staple fibres (2).

12. Filter medium according to any preceding claim, **characterized in that** the woven fabric (1) has a basis weight of above 250 g/m² and a thickness of not less than 0.5 mm and **in that** the staple fibres (2) have a linear density in the range from 0.5 dtex to 10 dtex, preferably from 0.9 to 7 dtex, and a cut length of not less than 20 mm.

13. Filter medium according to any preceding claim, **characterized in that** the staple fibres (2) consist of polytetrafluoroethylene.

14. Filter medium according to any preceding claim, **characterized in that** the staple fibres (2) have a rough surface due to a polymeric coating applied after needling.

15. Filter medium according to Claim 14, **characterized in that** the coating consists of polytetrafluoroethylene including organic fillers.

16. Filter medium according to any preceding claim, **characterized in that** it is in the form of a cloth.

17. Filter medium according to any of Claims 1 to 15, **characterized in that** it is in the form of a bag or pouch.

## Revendications

1. Élément filtrant, qui est constitué d'un tissu (1) en fils minéraux, qui est revêtu par aiguilletage avec des fibres polymères discontinues (2), **caractérisé en ce qu'**une membrane (3) en polytétrafluoroéthylène poreux recouvre au moins un côté de l'élément filtrant, notamment son côté d'entrée.

2. Élément filtrant selon la revendication 1, **caractérisé en ce que** la membrane (3) est constituée d'un polytétrafluoroéthylène poreux expansé présentant une perméabilité à l'air d'au moins 0,01 m³ par m² par heure à 12,7 mm de colonne d'eau.

3. Élément filtrant selon la revendication 2 ou 3, **caractérisé en ce que** la membrane (3) est reliée avec l'élément filtrant par un adhésif (4).

4. Élément filtrant selon la revendication 3, **caractérisé en ce que** l'adhésif (4) est un polymère fluoré.

5. Élément filtrant selon l'une quelconque des revendications précédentes, **caractérisé en ce que** le tissu (1) comprend des fibres de verre ou en est constitué.

6. Élément filtrant selon l'une quelconque des revendications 1 à 4, **caractérisé en ce que** le tissu (1) comprend des fils de basalte ou en est constitué.

7. Élément filtrant selon la revendication 6, **caractérisé en ce que** les fils de basalte sont des fils de fibres et/ou des fils de filaments, notamment des fils multifilaments.

8. Élément filtrant selon l'une quelconque des revendications précédentes, **caractérisé en ce que** le tissu (1) comprend des fils de chaîne et de trame, chacun constitués de fils de basalte et/ou de fibres de verre, ou en est constitué.

9. Élément filtrant selon l'une quelconque des revendications précédentes, **caractérisé en ce que** le tissu (1) fabriqué à partir de stratifils et de fils présente un poids surfacique de 250 à 600 g/m², notamment de 400 à 500 g/m².

10. Élément filtrant selon l'une quelconque des revendications précédentes, **caractérisé en ce que** le tissu (1) est constitué de plusieurs couches ou strates.

11. Élément filtrant selon l'une quelconque des revendications précédentes, **caractérisé en ce que** la proportion en poids des fibres discontinues (2) par rapport au poids total de l'élément filtrant est inférieure à 40 %.

12. Élément filtrant selon l'une quelconque des revendications précédentes, **caractérisé en ce que** le tissu (1) présente un poids surfacique supérieur à 250 g/m² et une épaisseur d'au moins 0,5 mm, et **en ce que** les fibres discontinues (2) présentent un titre de 0,5 dtx à 10 dtx, de préférence de 0,9 à 7 dtex, et une longueur de coupe d'au moins 20 mm.

13. Élément filtrant selon l'une quelconque des revendications précédentes, **caractérisé en ce que** les fibres discontinues (2) sont constituées de polytétrafluoroéthylène.

14. Élément filtrant selon l'une quelconque des revendications précédentes, **caractérisé en ce que** la surface des fibres discontinues (2) est rugosifiée par un revêtement polymère appliqué après l'aiguilletage.

15. Élément filtrant selon la revendication 14, **caractérisé en ce que** le revêtement est constitué d'un polytétrafluoroéthylène comprenant des charges organiques.

16. Élément filtrant selon l'une quelconque des revendications précédentes, **caractérisé en ce qu'**il présente la forme d'une toile.

17. Élément filtrant selon l'une quelconque des revendications 1 à 15, **caractérisé en ce qu'**il présente la forme d'un sachet ou d'une poche.
